# EUROPEAN PATENT SPECIFICATION

(11) **EP 3 628 647 B1**
(45) Date of publication and mention of the grant of the patent: **02.12.2020**
(21) Application number: 18196909.8
(22) Date of filing: 26.09.2018
(51) Int. Cl.: C04B 28/02, C04B 30/00, E01C 13/00

(54) **COMPOSITION FOR BUILDING A DYNAMIC LAYER OF A SPORTS FLOORING, SPORTS FLOORING AND METHOD FOR PROVIDING A SPORTS FLOORING**
ZUSAMMENSETZUNG ZUM AUFBAU EINER DYNAMISCHEN SCHICHT EINES SPORTBODENS, SPORTBODEN UND VERFAHREN ZUR BEREITSTELLUNG EINES SPORTBODENS
COMPOSITION PERMETTANT DE CONSTRUIRE UNE COUCHE DYNAMIQUE DE SOL SPORTIF, SOL SPORTIF ET PROCÉDÉ DE FABRICATION D'UN SOL SPORTIF

(43) Date of publication of application: 01.04.2020
(73) Proprietor: Pintat, Benoit, 68340 Zellenberg (FR)
(72) Inventor: Pintat, Benoit, 68340 Zellenberg (FR)
(74) Representative: Richardt Patentanwälte PartG mbB

(56) References cited:
- EP-A1- 3 409 837
- EP-A2- 2 749 350
- DE-A1- 19 726 687
- DE-U1-202017 001 061
- FR-A1- 2 501 744
- FR-A1- 2 783 848

## Description

### Field of the invention

The invention relates to the use of a composition for improving the dynamic layer of a sports flooring, a method for providing a sports flooring with an improved dynamic layer and a sports flooring with an improved dynamic layer.

### Background and related art

The invention is explained below with the reference to tennis courts. This reference does not imply a limitation of the invention, but rather that the invention is also applicable to fields for sports such as football, soccer, handball, basketball, badminton or other ball games.

Soft-surface courts, especially so-called clay courts, such as sand courts or ash courts, are preferred by many tennis players. This is due to the fact that playing on soft surfaces is less stressful to the bones, muscles and connective tissues than repetitive playing on hard-surface courts. The construction of tennis courts with a surface covering in the form of a top layer made of brick-dust or sand and with a dynamic layer made of volcanic rock situated below the top layer is known and described for example in DIN 18 035, sheet 5. Up to now, such tennis courts with a brick-dust top layer or sand top layer have been particularly popular because they allow for a high level of playing comfort. The sliding behavior on the surface and the bouncing behavior of the ball contribute to playing comfort. The dynamic layer usually consists of a water-retaining rock, such as volcanic rock or limestone. To a certain extent, it prevents the top layer from drying out too much by releasing stored water to the top layer in dry conditions. In addition, it reinforces the elastic compliance of the top layer and forms a grain-grained transition to the base layer (coarser than top layer and finer than base layer).

The disadvantage of such so-called clay courts (brick-dust courts, ash courts and sand courts) with a dynamic layer is that construction costs as well as maintenance costs and maintenance requirements are typically very high, which is due to the low durability of the water-bonded brick-dust or sand surface layer, as well as to its sensitivity to excess water. In addition, since most of these soft-surface courts are constructed outdoors and are made of porous materials, water retention following ambient rainfall may preclude play on the court surface due to puddles or a generally muddy court surface having a slippery consistency. However, a certain degree of moisture content should be maintained at all times in order to allow for cohesion and thus the impact strength of the brick-dust or sand top layer.

Hence, as a consequence to the comparatively low water-retention capacity of brick-dust or sand, regular and frequent watering of the brick-dust or sand layer is necessary to guarantee this necessary moisture content.

During extended periods of low or no precipitation, a lack of water in combination with elevated temperatures can also induce drought stress of the sports flooring, which when combined with mechanical stress may also negatively impact playing comfort due to a dehydrated and therefore slippery surface.

Drought stress and its negative effect on the surface of the sports flooring may be counteracted, as described above, by irrigation; however, this requires the availability of sufficient quantities of water, as well as the use of irrigation systems.

Environmentally, the use of irrigation systems can be problematic if water resources are limited and in particular if the water supplied by the irrigation system is not sufficiently taken up by the upper layers of the sports flooring, e.g., the top layer and the dynamic layer, because most of the water seeps into the deeper layers, e.g., base layer and filter layer, if present, of the sports flooring, where it is no longer accessible by capillary forces to the materials of the upper layers. Hence, more frequent irrigation intervals are required to ensure that sufficient amounts of water are provided to the upper layers in the sports flooring. However, increased irrigation will increase the environmental burden as well as the cost to maintain the top layer of the sports flooring.

EP 2 749 350 A2, EP 3 409 837 A1, FR 2 783 848 A1 and FR 2 501 744 A1 disclose compositions for top layers for sports flooring, which enable moisture maintenance over a period of time. EP 2 749 350 A2 discloses a top layer composition that includes at least a mixture of a microporous mineral of the zeolite type and a salt in order to allow for an adsorption and/or desorption effect, the composition including a permeable film at least partially coating the microporous mineral. EP 3 409 837 A1 discloses a method for forming an artificial turf infill material. The method comprises selecting from a zeolite ore a microporous zeolite mineral using a selection criterion on specific surface area of the mineral, thereby providing the artificial turf infill material. FR 2 783 848 A1 discloses a porous support-covering for playing fields, consisting of a rigid microporous coating having a structure enabling it to maintain the surface covering (3 beneath which it is arranged permanently humid, said coating consisting of a mixture of microporous structural elements, bare filler elements, friction elements and binders ensuring proper cohesion of the assembly after the coating has been cast on the field infrastructure. FR 2 501 744 A1 discloses a soil dressing for use as a tennis court surface. The dressing comprises dry mixture of crushed red or grey volcanic rock having a particle size of between 0-2mm for the whole or major part of the dressing and has has 10-20% by volume of a natural filler and 4-6% by volume of lime.

There is thus a need for cost-efficient and environmentally friendly methods to further improve the regulation of water uptake by the top layer in sports flooring, thereby enabling longer playability and improved playing comfort on the sports flooring.

### Summary

In one aspect, the invention relates to a method for providing a sports flooring. The sports flooring comprises a top layer, which is arranged above a dynamic layer. Such a flooring may be a sports flooring with a soft surface, such as a clay court, a sand court or an ash court. The method comprises the steps of providing a dynamic layer, wherein the dynamic layer comprises a particulate composition for building a dynamic layer comprising a mixture of lava particles and/or limestone particles and/or clinker particles, and microporous zeolite mineral particles.

The microporous zeolite mineral particles are present in the amount of 4% to 65% of the total mass of the dynamic layer and the grain size of the microporous zeolite mineral particles is between 0.4 mm and 12 mm.

The term "zeolite mineral" as used herein refers to a group of more than 60 soft, white aluminosilicate minerals of tectosilicate type - a three-dimensional framework of interconnected tetrahedra, comprising to a large extend aluminum, silicon and oxygen atoms. Zeolite minerals have a crystalline structure built from [AlO₄]⁵⁻ and [SiO₄]⁴⁻ bonded together in such a way that all four oxygen atoms, located at the corners of each tetrahedron, are shared with adjacent tetrahedral crystals. The general formula of zeolites can be described as Me_{2/n}O·Al₂O₃·xSiO₂·yH₂O, whereby Me is any alkaline or alkaline earth atom, n is the charge on that atom, x is the number of Si tetrahedrons (varying from 2 to 10), and y is the number of water molecules, typically between 2 and 7. Examples of natural zeolites include chabazite, erionite, mordenite, clinoptilolite, phillipsite, stilbite and laumontite. Preferred zeolites according to the invention may include chabazite, erionite, mordenite, clinoptilolite, phillipsite, stilbite and laumontite and may be obtained by mining due to their abundance in nature, resulting in lower production costs compared with the same amount of synthetic zeolites, such as faujasite, zeolite A, zeolite L, zeolite Y, zeolite X and ZSM-5. Synthetic zeolite minerals may also be used instead of or in addition to natural zeolites. The term "microporous zeolite mineral particle" as used in the invention refers to porous zeolite minerals, which are characterized by pore diameters of less than about 10 nm (e.g., about 1 nm, 2 nm, 3 nm, 4 nm, 6 nm, 7 nm, up to about 9 nm), or to zeolite minerals, such as those disclosed above, which are able to absorb and adsorb (also referred to as sorption) water, which can be reversibly be released from the microporous zeolite mineral particles.

The method further comprises the step of applying a top layer on top of the arranged dynamic layer. The top layer may, for example, be made up of crushed shale, crushed stone, crushed brick (clay), quartz sand, volcanic ash, or a mixture of these or other materials. It may be further feasible that other materials are mixed into the top layer.

This method may be advantageous for providing sports flooring, since the microporous zeolite mineral particles are distributed in the dynamic layer. Thus, after the sports flooring has been provided, water provided to the sports flooring by rain or irrigation may be taken up by the microporous zeolite mineral particles and stored within the microporous zeolite mineral particles of the dynamic layer. In addition, seeping of water into the deeper layers of the sports flooring, from where it is not recoverable, may be reduced. The water stored in the microporous zeolite mineral particles may then, when needed due to drought stress, be accessed by the materials of the top layer by capillary forces. Thus, the top layer may be maintained with the moisture content needed.

Since the microporous zeolite mineral particles are distributed in the dynamic layer, water may be taken up by the microporous zeolite mineral particles and stored within the microporous zeolite mineral particles of the dynamic layer in an enhanced matter, compared to known dynamic layers, which are made up of, for example, volcanic rock or limestone. In addition, seeping of water into the deeper layers of the sports flooring, from where it is not recoverable, may be reduced. The in the microporous zeolite mineral particles stored water, which may, when needed due to drought stress, be accessed by the materials of the top layer by capillary forces. Thus, the top layer may be maintained with the moisture content needed to provide cohesion and thus impact strength.

As described above, it is within the scope of the invention that the microporous zeolite mineral particles are present at 4% to 65% of the total mass of the dynamic layer composition.

In very hot areas, where it rarely rains, it may be reasonable that the total mass of the composition comprises the microporous zeolite mineral particles in an amount of 30% to 65% or 30% to 50%. However, in areas with regular rainfall and/or high humidity, it may be environmentally friendly and cost-efficient that the total mass of the dynamic layer composition comprises microporous zeolite mineral particles in the amount of 4% to 10%.

As described above, it is further within the scope of the invention that the grain size of the microporous zeolite mineral particles is between 0.4 mm and 12 mm.

The selected size depends on the desired diffusion rate of water from the zeolite. Accordingly, if slow diffusion rates are required, a particle size of between 5 mm and 12 mm may be beneficial - or, even more advantageous, between 8 mm and 12 mm.

In accordance with one embodiment of the invention, the microporous zeolite mineral particles of the composition for building a dynamic layer of a sports flooring are selected from the group consisting of chabazite, erionite, mordenite, chinoptilolite, phillipsite, stilbite, laumontite, faujasite, zeolite A, zeolite L, zeolite Y, zeolite X and ZSM-5.

The microporous zeolite mineral particles used within the scope of the invention may thus be a microporous zeolite mineral that can be natural or obtained by synthesis.

Preferably, microporous zeolite mineral particles, which may have a Mohs hardness above 3 and may have a strong adsorbent power are used for the dynamic layer. Thus, the most preferred microporous zeolite mineral for the dynamic layer may be of the clinoptilolite and/or mordenite type. Another most preferred microporous zeolite mineral may be of the chabazite type with high hardness properties. A microporous zeolite of the clinoptilolite type may be particularly advantageous due to its properties, such as e.g. density, hardness and purity. Thus, the most preferred microporous zeolite of the clinoptilolite type may have a density after drying the (not crushed) source rock of between 2200 and 2440 kg/m³, a purity of 90% to 98%, and a Mohs hardness of between 3.5 and 4. It may be further beneficial that the specific surface area of the microporous zeolite of the clinoptilolite type is between 20 m²/g and 30 m²/g (more favorable at about 30 m²/g) and that the size of the angstrom cavities may be between 5.2 Å and 5.5 Å. The properties of the composition of the dynamic layer may be even further improved if the dynamic layer composition is comprised of a mixture of microporous zeolite minerals of the clinoptilolite type and limestone particles.

Further, the specific surface area of the microporous zeolite mineral particles can be chosen to be smaller than a predetermined maximum specific surface area. The maximum specific surface area of the mineral may for example be determined as the surface specific area that enables the water in the mineral to release, under a certain ambient temperature, at a predefined minimum rate.

In one embodiment of the invention, the dynamic layer is fabricated so that it has a thickness of 5 to 13 cm, preferably 6 to 10 cm.

In accordance with one embodiment of the invention, the sports flooring further comprises a base layer and/or a filter layer, wherein the base layer and/or the filter layer is arranged below the dynamic layer.

In accordance with one embodiment of the invention, the top layer of the sports flooring comprises a mixture of at least one material selected from the group consisting of crushed shale, crushed stone, crushed brick (clay), quartz sand and volcanic ash, or a mixture thereof, and microporous zeolite mineral particles, wherein the microporous zeolite mineral particles are present in the amount of 5% to 70% of the total mass of the top layer, wherein the grain size of at least one material selected from the group consisting of crushed shale, crushed stone, crushed brick, quartz sand and volcanic ash is smaller than 3.15 mm, and wherein the grain size of the microporous zeolite mineral particles is between 0.03 mm and 2.2 mm.

The microporous zeolite mineral particles for the top layer may be selected from the group consisting of chabazite, erionite, mordenite, clinoptilolite, faujasite, phillipsite, zeolite A, zeolite L, zeolite Y, zeolite X and ZSM-5. The zeolite used for the top layer may thus be a zeolite that can be natural or obtained by synthesis.

Preferably, a zeolite with a Mohs hardness above 3, a strong adsorbent power and a color that approximately resembles one of the well-known surface colors (e.g., red, brown, green) is used. Thus, the most preferred microporous zeolite mineral particles may be of the chabazite and/or clinoptilolite and/or mordenite type. A microporous zeolite of the chabazite type may be particularly advantageous due to its color, density, hardness and purity. Thus, the most preferred microporous zeolite of the chabazite type may have a brownish color, such as the top layer of the well-known clay courts or sand courts. Thus, the mixture of at least one material selected from the group consisting of crushed shale, crushed stone, crushed brick, quartz sand and volcanic ash with the microporous zeolite particles of the chabazite type may prevent players from perceiving the top layer as uneven or having an unbalanced color. It may also be beneficial that the microporous zeolite particles of the chabazite type have a density (after drying) of 800 kg/m³ to 930 kg/m³, and preferably a density of about 900 kg/m³. It may be further beneficial that the specific surface area of the microporous zeolite of the chabazite type is between 20 m²/g and 30 m²/g, more favored at about 30 m²/g, and that the size of the angstrom cavities may be between 4.0 Å and 5.0 Å.

Further, the specific surface area of the microporous zeolite mineral particles of the top layer can be chosen to be smaller than a predetermined maximum specific surface area. The maximum specific surface area of the microporous zeolite mineral may for example be determined as the specific surface area that enables the water in the microporous zeolite mineral particle to release, under a certain ambient temperature, at a predefined minimum rate.

The mass content of the microporous zeolite mineral particles may be chosen according to the need for the progressive release of water and the relative humidity of the surface layer.

Preferably, the microporous zeolite mineral particles are present in the amount of 5% to 70% of the total mass of the top layer; however, to reduce production costs of the top layer composition and/or the synthesis or production of the microporous zeolite mineral particles, and if the ambient weather conditions allow for it, it is also feasible to have microporous zeolite mineral particles present in the amount of 5.5% to 50% of the total mass of the top layer composition, or between 6% and 25% of the total mass of the top layer composition, or between 6% to 15% of the total mass of the top layer composition.

Since slab or round grains are not compactable and lead to unpleasant and slippery surfaces, the crushed shale, crushed stone, crushed brick, quartz sand or volcanic ash of the present invention can have a grain form that is compact and/or sharp-edged and/or cubic. The grain size of the crushed shale, crushed stone, crushed brick, quartz sand or volcanic ash is preferably smaller than 3.15 mm to limit the risk of injury to the skin after a fall.

Due to the fact that the surface strength (stability) and water permeability of the top layer depend on the grain size distribution, it is envisaged that the grain size distribution of the top layer, comprising crushed shale, crushed stone, crushed brick, quartz sand or volcanic ash, and microporous zeolite mineral particles, is as follows: 20% to 33% of the grains have a size smaller than 0.06 mm; 20% to 50% of the grains have a size between 0.061 mm and 0.7 mm; and 20% to 33% of the grains have a size between 0.71 mm and 2.2 mm.

If, for example, there is too much grain with a grain size between 0.70 mm and 2.00 mm, the surface shear strength and also the optics of the top layer suffer as a result. If there are too many fine particles with a grain size smaller than 0.06 mm, the water permeability and stability of the top surface layer is not satisfactory.

Further, in case the top layer composition comprises a mixture of at least one material selected from the group consisting of crushed shale, crushed stone, crushed brick (clay), quartz sand and volcanic ash, or a mixture thereof, and microporous zeolite mineral particles, it is within the scope of the invention that the overall grain size distribution of the top layer is as follows: less than 33% of the grains have a size smaller than 0.06 mm; approximately 40% of the grains have a size between 0.061 mm and 0.7 mm; and less than 33% of the grains have a size between 0.71 mm and 2.0 mm.

In one embodiment of the invention, the microporous zeolite mineral particles of the top layer and/or the dynamic layer are selected from the group consisting of chabazite, erionite, mordenite, chinoptilolite, phillipsite, stilbite, laumontite, faujasite, zeolite A, zeolite L, zeolite Y, zeolite X and ZSM-5.

The zeolite mineral particles used within the scope of the invention may thus be zeolite mineral particles that can be natural or obtained by synthesis.

For the dynamic layer and for the top layer it may be advantageous to use microporous zeolite mineral particles with a Mohs hardness above 3 and a strong adsorbent power. For the top layer it may be advantageous to use zeolite particles with a color that approximately resembles one of the well-known surface colors (e.g., red, brown, green). Thus, the most preferred microporous zeolite mineral particles for the top layer may be of the chabazite and/or clinoptilolite and/or mordenite type.

Further, the specific surface area of the microporous zeolite mineral particles of the top layer and/or the dynamic layer may be chosen individually to be smaller than a predetermined maximum specific surface area. The maximum specific surface area of the mineral particles of the dynamic layer may for example be determined as the specific surface area that enables the water in the mineral particles to release, under a certain ambient temperature, at a predefined minimum rate, and the maximum specific surface area of the mineral particles of the top layer may for example be determined as the specific surface area that enables the water in the mineral particles to release at a predefined minimum rate, under a certain ambient temperature that is lower or higher than the ambient temperature chosen for the dynamic layer. Thus, the water stored in the microporous zeolite mineral particles of the dynamic layer may be accessed by the top layer materials (mixture of at least one material selected from the group consisting of crushed shale, crushed stone, crushed brick (clay), quartz sand and volcanic ash, or a mixture thereof, and microporous zeolite mineral particles) by capillary forces. Thus, the part of the top layer composition mixture consisting of at least one material selected from the group consisting of crushed shale, crushed stone, crushed brick (clay), quartz sand and volcanic ash, or a mixture thereof, may be maintained with the moisture content needed to provide cohesion and thus impact strength from the water provided from the dynamic layer. The microporous zeolite mineral particles of the top layer may, however, store water accessed from the dynamic layer by capillary forces and release it at a later time or at a slower rate, thus further extending the period of the maintained moisture content.

In another aspect, the invention relates to a sports flooring, which may be obtained according to the method described above.

In another aspect, the invention relates to a sports flooring comprising a top layer and a dynamic layer, wherein the top layer is arranged on top of the dynamic layer. The dynamic layer of the sports flooring comprises a mixture of lava particles and/or limestone particles and/or clinker particles, and microporous zeolite mineral particles.

The microporous zeolite mineral particles of the dynamic layer may be selected from the group consisting of chabazite, erionite, mordenite, chinoptilolite, phillipsite, stilbite, laumontite, faujasite, zeolite A, zeolite L, zeolite Y, zeolite X and ZSM-5.

It is within the scope of the invention that the microporous zeolite mineral particles are present in the amount of 4% to 65% of the total mass of the dynamic layer. In very hot areas where it rarely rains, it may be reasonable that the microporous zeolite mineral particles are present in the amount of 30% to 65% of the total mass of the composition. However, in areas with regular rainfall and/or high humidity, the microporous zeolite mineral particles may be present in the amount of 4% to 10% or 11% to 20% of the total mass of the composition, a more cost-efficient and environmentally friendly composition. Another advantage of these embodiments is that the grain size of the microporous zeolite mineral particles of the dynamic layer is between 0.4 mm and 12 mm. As explained above, the selected size depends on the desired diffusion rate of water from the zeolite. Accordingly, it may be beneficial that if slow diffusion rates are required, the particle size between 5 mm and 12 mm, or, even more advantageous, between 8 mm and 12 mm.

For these or other embodiments of the sports flooring it is further beneficial that the top layer comprises a mixture of at least one material selected from the group consisting of crushed shale, crushed stone, crushed brick (clay), quartz sand and volcanic ash, or a mixture thereof, as well as microporous zeolite mineral particles, wherein the microporous zeolite mineral particles are present in the amount of 5% to 70% of the total mass of the top layer. For this embodiment, it is also advantageous that the grain size of at least one material selected from the group consisting of crushed shale, crushed stone, crushed brick, quartz sand and volcanic ash is smaller than 3.15 mm. Further, it is advantageous that the grain size of the microporous zeolite mineral particles is between 0.03 mm and 2.2 mm.

It is further within the scope of the invention of the sports flooring that the sports flooring further comprises a base layer and, optionally, a filter layer. Both the base layer and the filter layer, when present, are arranged below the dynamic layer. In case a base layer and a filter layer are present, the filter layer is arranged below the base layer.

For any of the embodiments of the sports flooring, it is also envisaged that the sports flooring further comprises an irrigation system.

The use of an irrigation or sprinkler system with the sports flooring, which has a top layer and a dynamic layer, as described above, may be beneficial because it can automatically irrigate the surface layers. For example, this may be a convenient means of watering the surface layer during a time period that is defined based on the minimum release rate of the water from the microporous zeolite mineral particles. The selected microporous mineral particles may have a specific surface area that enables the water to steadily release over a period of two to three hours. In this case, the irrigation system may be configured to water the top layer and thus the dynamic layer at a predefined time before a tennis match.

In another aspect, the invention relates to the use of a dynamic layer composition, as described above, for building the dynamic layer of a sports flooring, in particular a clay court, a sand court or an ash court, wherein the composition comprises mixture of lava particles and/or limestone particles and/or clinker particles and microporous zeolite mineral particles, wherein the microporous zeolite mineral particles are present in the amount of 4% to 65% of the total mass of the composition and wherein the grain size of the microporous zeolite mineral particles is between 0.4 mm and 12 mm.

Although the present invention is described in detail, it is to be understood that this invention is not limited to the particular methodologies or protocols described herein, as these may vary. It is also to be understood that the terminology used herein is for the purpose of describing particular embodiments only and is not intended to limit the scope of the present invention, which will be limited only by the appended claims. Unless defined otherwise, all technical and scientific terms used herein have the same meanings as commonly understood by an ordinary person skilled in the art.

It is understood that one or more of the aforementioned embodiments of the invention may be combined as long as the combined embodiments are not mutually exclusive.

Throughout this specification and the claims that follow, unless the context requires otherwise, the term "comprise" and variations such as "comprises" and "comprising" will be understood to imply the inclusion of a stated member, integer or step, and the optional inclusion of any other non-stated member, integer or step. The term "consist of" is a particular embodiment of the term "comprise," wherein any other non-stated member, integer or step is excluded.

The terms "a" and "an" and "the" and similar references used in the context of describing the invention (especially in the context of the claims) are to be construed to cover both the singular and the plural, unless otherwise indicated herein or clearly contradicted by context.

Recitation of ranges of values herein is merely intended to serve as a shorthand method of referring individually to each separate value falling within the range. Unless otherwise indicated herein, each individual value is incorporated into the specification as if it were individually recited herein. No language in the specification should be construed as indicating any non-claimed element essential to the practice of the invention.

### Brief description of the drawings

In the following, embodiments of the invention are explained in greater detail, by way of example only, making reference to the drawings, in which:
- Fig. 1: illustrates a schematic sectional view of the structure of a sports flooring with a top layer arranged above a dynamic layer;
- Fig. 2: illustrates a schematic sectional view of a top layer arranged above a dynamic layer, the dynamic layer comprising microporous zeolite mineral particles; and
- Fig. 3: illustrates a schematic sectional view of a top layer arranged above a dynamic layer, both layers comprising microporous zeolite mineral particles.

Like-numbered elements in these figures either are equivalent elements or perform the same function. Elements that have been discussed previously will not necessarily be discussed in later figures if the function is equivalent.

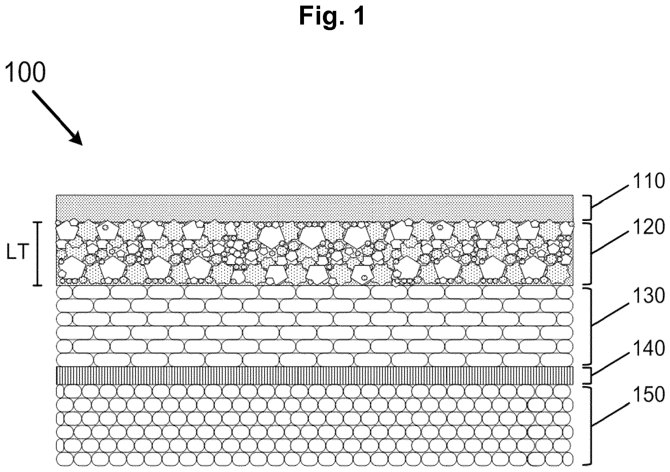

Fig. 1 illustrates a sectional view of a sports flooring 100 with a top layer 110 arranged above a dynamic layer 120. The top layer 110 comprises material 111 selected from the group consisting of crushed shale, crushed stone, crushed brick, quartz sand and volcanic ash, or a mixture thereof. The top layer 110 may comprise microporous zeolite mineral particles. The dynamic layer 120 is provided with a layer thickness LT of 5 to 13 cm, preferably with a layer thickness of 6 to 10 cm, and is arranged below the top layer 110 and above a base layer 130, which is arranged above the soil layer 150. The dynamic layer 120 comprises a composition comprising lava particles and/or limestone particles and/or clinker particles, which are mixed with microporous zeolite mineral particles. The microporous zeolite mineral particles may be present in the amount of 4% to 65%, 4% to 10%, 10% to 20%, or 30% to 50% of the total mass of the composition. For some embodiments, the grain size of the microporous zeolite mineral particles is between 0.4 mm and 12 mm. If a filter layer 140 is present, the filter layer 140 is arranged between the base layer 130 and the soil layer 150. The sports flooring 100 can be constructed on ground areas intended for use in tennis, football, soccer, handball, basketball, badminton or other ball games. In the shown embodiment, however, the sports flooring 100 is a sports flooring for soft-surface courts, in particular so-called clay courts, sand courts or ash courts.

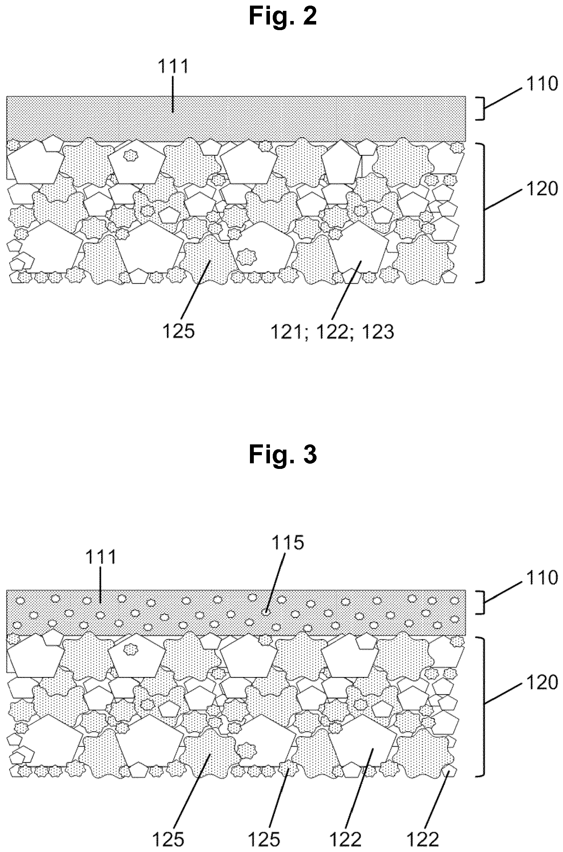

Fig. 2 illustrates a schematic sectional view of a top layer 110 arranged above a dynamic layer 120, wherein the dynamic layer 120 comprises microporous zeolite mineral particles 125. The top layer 110 is a common soft-surface top layer, comprising at least one material 111 selected from the group consisting of crushed shale, crushed stone, crushed brick (clay), quartz sand and volcanic ash, or a mixture thereof, wherein the grain size of the top layer particles is smaller than 3.15 mm. The dynamic layer 120 comprises a composition comprising a mixture of lava particles 121 and/or limestone particles 122 and/or clinker particles 123 and microporous zeolite mineral particles 125, wherein the microporous zeolite mineral particles 125 are present in the amount of 4% to 65% of the total mass of the composition and wherein the grain size of the microporous zeolite mineral particles 125 is between 0.4 mm and 12 mm.

Fig. 3 illustrates a schematic sectional view of a top layer 110 arranged above a dynamic layer 120, both layers 110, 120 comprising microporous zeolite mineral particles 115, 125. The top layer 110 of this embodiment comprises a composition comprising at least one material 111 selected from the group consisting of crushed shale, crushed stone, crushed brick (clay), quartz sand and volcanic ash, or a mixture thereof, as well as microporous zeolite mineral particles 115. The microporous zeolite mineral particles 115 are present in the amount of 5% to 70% of the total mass of the top layer 110. The grain size of the microporous zeolite mineral particles 115 of the top layer is between 0.03 mm and 2.2 mm. The grain size of at least one material 111 selected from the group consisting of crushed shale, crushed stone, crushed brick (clay), quartz sand and volcanic ash is smaller than 3.15 mm. The dynamic layer 120 comprises in this embodiment a composition comprising a mixture of limestone particles 122 and microporous zeolite mineral particles 125, wherein the microporous zeolite mineral particles 125 are present in the amount of 4% to 65% of the total mass of the composition and wherein the grain size of the microporous zeolite mineral particles 125 is between 0.4 mm and 12 mm.

### List of reference numerals

- 100: sports flooring
- 110: top layer
- 111: material selected from the group consisting of crushed shale, crushed stone, crushed brick, quartz sand and volcanic ash, or a mixture thereof
- 115: microporous zeolite mineral particles (in top layer)
- 120: dynamic layer
- 121: lava particles
- 122: limestone particles
- 123: clinker particles
- 125: microporous zeolite mineral particles (in dynamic layer)
- 130: base layer
- 140: filter layer
- 150: soil layer
- LT: layer thickness

## Claims

1. Method for providing a sports flooring (100), in particular a clay court, a sand court or an ash court, the sports flooring (100) comprising a top layer (110) arranged above a dynamic layer (120), said method comprising
i. providing a dynamic layer (120) comprising a mixture of
- lava particles (121) and/or limestone particles (122) and/or clinker particles (123), and microporous zeolite mineral particles (125), wherein the microporous zeolite mineral particles (125) are present in the amount of 4% to 65% of the total mass of the dynamic layer (120) and wherein the grain size of the microporous zeolite mineral particles (125) is between 0.4 mm and 12 mm, and
ii. applying a top layer (110) on top of the dynamic layer (120).

2. The method according to claim 1, wherein the dynamic layer (120) is provided with a layer thickness (LT) of 5 to 13 cm, preferably with a layer thickness (LT) of 6 to 10 cm.

3. The method according to claim 1 or claim 2, wherein the sports flooring (100) further comprises a base layer (130) and/or a filter layer (140), wherein the base layer (130) and/or the filter layer (140) are arranged below the dynamic layer (120).

4. The method according to at least one of the claims 1-3, wherein the top layer (110) of the sports flooring (100) comprises a mixture of
- at least one material (111) selected from the group consisting of crushed shale, crushed stone, crushed brick, quartz sand and volcanic ash, or a mixture thereof, and
- microporous zeolite mineral particles (115),
wherein the microporous zeolite mineral particles (115) are present in the amount of 5% to 70% of the total mass of the top layer (110),
wherein the grain size of the at least one material (111) selected from the group consisting of crushed shale, crushed stone, crushed brick, quartz sand and volcanic ash is smaller than 3.15 mm, and wherein the grain size of the microporous zeolite mineral particles (115) is between 0.03 mm and 2.2 mm.

5. The method according to claims 1-3 or claim 4, wherein the microporous zeolite mineral particles (125) of the dynamic layer (120) or the microporous zeolite mineral particles (125) of the dynamic layer (120) and/or the microporous zeolite mineral particles (115) of the top layer (110) are selected from the group consisting of chabazite, erionite, mordenite, chinoptilolite, phillipsite, stilbite, laumontite, faujasite, zeolite A, zeolite L, zeolite Y, zeolite X and ZSM-5.

6. Sports flooring (100) comprising a top layer (110) and a dynamic layer (120), the top layer (110) being arranged on top of the dynamic layer (120), the dynamic layer (120) comprising a mixture of
- lava particles (121) and/or limestone particles (122) and/or clinker particles (123), and
- microporous zeolite mineral particles (125)
wherein the microporous zeolite mineral particles (125) are present in the amount of 4% to 65% of the total mass of the dynamic layer (120) and
wherein the grain size of the microporous zeolite mineral particles (125) is between 0.4 mm and 12 mm.

7. The sports flooring (100) according to claim 6, wherein the top layer (110) comprises a mixture of
- at least one material (111) selected from the group consisting of crushed shale, crushed stone, crushed brick, quartz sand and volcanic ash, or a mixture thereof, and
- microporous zeolite mineral particles (115),
wherein the microporous zeolite mineral particles (115) are present in the amount of 5% to 70% of the total mass of the top layer (110), wherein the grain size of the at least one material (111) selected from the group consisting of crushed shale, crushed stone, crushed brick, quartz sand and volcanic ash is smaller than 3.15 mm, and wherein the grain size of the microporous zeolite mineral particles (115) is between 0.03 mm and 2.2 mm.

8. The sports flooring (100) according to any of the claims 6-7, further comprising a base layer (130) and/or a filter layer (140), arranged below the dynamic layer (120).

9. The sports flooring (100) according to any of the claims 6-8, further comprising an irrigation system.

10. Use of a composition for building a dynamic layer (120) of a sports flooring (100), in particular a clay court, a sand court or an ash court, the composition comprising a mixture of lava particles (121) and/or limestone particles (122) and/or clinker particles (123) and microporous zeolite mineral particles (125), wherein the microporous zeolite mineral particles (125) are present in the amount of 4% to 65% of the total mass of the composition and wherein the grain size of the microporous zeolite mineral particles (125) is between 0.4 mm and 12 mm.

## Patentansprüche

1. Verfahren zum Bereitstellen eines Sportbodens (100), insbesondere eines Clay Courts, eines Sandplatzes oder eines Ascheplatzes, wobei der Sportboden (100) eine oberste Schicht (110) umfasst, die oberhalb einer dynamischen Schicht (120) angeordnet ist, wobei das Verfahren umfasst:
i. Bereitstellen einer dynamischen Schicht (120), die eine Mischung umfasst aus
- Lavateilchen (121) und/oder Kalksteinteilchen (122) und/oder Klinkerteilchen (123)
und mikroporösen Zeolithmineralteilchen (125), wobei die mikroporösen Zeolithmineralteilchen (125) in der Menge von 4 % bis 65 % der Gesamtmasse der dynamischen Schicht (120) vorhanden sind, und wobei die Korngröße der mikroporösen Zeolithmineralteilchen (125) zwischen 0,4 mm und 12 mm liegt, und
ii. Auftragen einer obersten Schicht (110) auf die Oberseite der dynamischen Schicht (120).

2. Verfahren nach Anspruch 1, wobei die dynamische Schicht (120) mit einer Schichtdicke (LT) von 5 bis 13 cm, vorzugsweise mit einer Schichtdicke (LT) von 6 bis 10 cm versehen wird.

3. Verfahren nach Anspruch 1 oder Anspruch 2, wobei der Sportboden (100) ferner eine Basisschicht (130) und/oder eine Filterschicht (140) umfasst, wobei die Basisschicht (130) und/oder die Filterschicht (140) unterhalb der dynamischen Schicht (120) angeordnet wird/werden.

4. Verfahren nach mindestens einem der Ansprüche 1-3, wobei die oberste Schicht (110) des Sportbodens (100) eine Mischung umfasst aus
- mindestens einem Material (111), das ausgewählt ist aus der Gruppe bestehend aus zerkleinertem Schiefer, zerkleinertem Stein, zerkleinertem Ziegelstein, Quarzsand und Vulkanasche, oder einer Mischung davon, und
- mikroporösen Zeolithmineralteilchen (115),
wobei die mikroporösen Zeolithmineralteilchen (115) in der Menge von 5 % bis 70 % der Gesamtmasse der obersten Schicht (110) vorhanden sind,
wobei die Korngröße des mindestens einen Materials (111), das ausgewählt ist aus der Gruppe bestehend aus zerkleinertem Schiefer, zerkleinertem Stein, zerkleinertem Ziegelstein, Quarzsand und Vulkanasche, kleiner ist als 3,15 mm, und wobei die Korngröße der mikroporösen Zeolithmineralteilchen (115) zwischen 0,03 mm und 2,2 mm liegt.

5. Verfahren nach den Ansprüchen 1-3 oder nach Anspruch 4, wobei die mikroporösen Zeolithmineralteilchen (125) der dynamischen Schicht (120) oder die mikroporösen Zeolithmineralteilchen (125) der dynamischen Schicht (120) und/oder die mikroporösen Zeolithmineralteilchen (115) der obersten Schicht (110) ausgewählt sind aus der Gruppe bestehend aus Chabasit, Erionit, Mordenit, Kinoptilolit, Phillipsit, Stilbit, Laumontit, Faujasit, Zeolith A, Zeolith L, Zeolith Y, Zeolith X und ZSM-5.

6. Sportboden (100), eine oberste Schicht (110) und eine dynamische Schicht (120) umfassend, wobei die oberste Schicht (110) auf der Oberseite der dynamischen Schicht (120) angeordnet ist, wobei die dynamische Schicht (120) eine Mischung umfasst aus
- Lavateilchen (121) und/oder Kalksteinteilchen (122) und/oder Klinkerteilchen (123) und
- mikroporösen Zeolithmineralteilchen (125) umfasst,
wobei die mikroporösen Zeolithmineralteilchen (125) in der Menge von 4 % bis 65 % der Gesamtmasse der dynamischen Schicht (120) vorhanden sind, und
wobei die Korngröße der mikroporösen Zeolithmineralteilchen (125) zwischen 1,4 mm und 12 mm liegt.

7. Sportboden (100) nach Anspruch 6, wobei die oberste Schicht (110) eine Mischung umfasst aus
- mindestens einem Material (111), das ausgewählt ist aus der Gruppe bestehend aus zerkleinertem Schiefer, zerkleinertem Stein, zerkleinertem Ziegelstein, Quarzsand und Vulkanasche, oder einer Mischung davon, und
- mikroporösen Zeolithmineralteilchen (115),
wobei die mikroporösen Zeolithmineralteilchen (115) in der Menge von 5 % bis 70 % der Gesamtmasse der obersten Schicht (110) vorhanden sind, wobei die Korngröße des mindestens einen Materials (111), das ausgewählt ist aus der Gruppe bestehend aus zerkleinertem Schiefer, zerkleinertem Stein, zerkleinertem Ziegelstein, Quarzsand und Vulkanasche, kleiner ist als 3,15 mm, und wobei die Korngröße der mikroporösen Zeolithmineralteilchen (115) zwischen 0,03 mm und 2,2 mm liegt.

8. Sportboden (100) nach einem der Ansprüche 6-7, ferner eine Basisschicht (130) und/oder eine Filterschicht (140) umfassend, die unterhalb der dynamischen Schicht (120) angeordnet ist/sind.

9. Sportboden (100) nach einem der Ansprüche 6-8, ferner ein Bewässerungssystem umfassend.

10. Verwendung einer Zusammensetzung zum Aufbauen einer dynamischen Schicht (120) eines Sportbodens (100), insbesondere eines Clay Courts, eines Sandplatzes oder eines Ascheplatzes, wobei die Zusammensetzung eine Mischung aus Lavateilchen (121) und/oder Kalksteinteilchen (122) und/oder Klinkerteilchen (123) und mikroporöse Zeolithmineralteilchen (125) umfasst, wobei die mikroporösen Zeolithmineralteilchen (125) in der Menge von 4 % bis 65 % der Gesamtmasse der Zusammensetzung vorhanden sind, und wobei die Korngröße der mikroporösen Zeolithmineralteilchen (125) zwischen 0,4 mm und 12 mm liegt.

## Revendications

1. Procédé de production d'un plancher de sport (100), en particulier, d'un court en argile, d'un court en sable ou d'un court en cendres, le plancher de sport (100) comprenant une couche supérieure (110) agencée au-dessus d'une couche dynamique (120), ledit procédé comprenant
i. la mise au point d'une couche dynamique (120) comprenant un mélange de
- particules de lave (121), et/ou de particules de calcaire (122), et/ou de particules de clinker (123), et de particules minérales de zéolithe microporeuse (125), où les particules minérales de zéolithe microporeuse (125) sont présentes dans une quantité de 4 % à 65 % par rapport à la masse totale de la couche dynamique (120) et où la taille des grains des particules minérales de zéolithe microporeuse (125) est entre 0,4 mm et 12 mm, et
ii. l'application d'une couche supérieure (110) sur le dessus de la couche dynamique (120).

2. Procédé selon la revendication 1, dans lequel la couche dynamique (120) est pourvue d'une épaisseur de couche (LT) de 5 à 13 cm, de préférence, d'une épaisseur de couche (LT) de 6 à 10 cm.

3. Procédé selon la revendication 1 ou la revendication 2, dans lequel le plancher de sport (100) comprend en outre une couche de base (130) et/ou une couche filtre (140), où la couche de base (130) et/ou la couche filtre (140) sont agencées en-dessous de la couche dynamique (120).

4. Procédé selon au moins l'une des revendications 1 à 3, dans lequel la couche supérieure (110) du plancher de sport (100) comprend un mélange
- d'au moins un matériau (111) choisi dans le groupe constitué de schiste broyé, de pierre broyée, de brique broyée, de sable de quartz et de cendres volcaniques, ou un mélange de ceux-ci, et
- de particules minérales de zéolithe microporeuse (115),
où les particules minérales de zéolithe microporeuses (115) sont présentes dans une quantité de 5 % à 70 % par rapport à la masse totale de la couche supérieure (110), où la taille des grains de l'au moins un matériau (111) choisi dans le groupe constitué de schiste broyé, de pierre broyée, de brique broyée, de sable de quartz et de cendres volcaniques est inférieure à 3,15 mm, et où la taille des grains des particules minérales de zéolithe microporeuse (115) est entre 0,03 mm et 2,2 mm.

5. Procédé selon les revendications 1 à 3 ou la revendication 4, dans lequel les particules minérales de zéolithe microporeuse (125) de la couche dynamique (120), ou les particules minérales de zéolithe microporeuse (125) de la couche dynamique (120) et/ou les particules minérales de zéolithe microporeuse (115) de la couche supérieure (110) sont choisies dans le groupe constitué de la chabazite, de l'érionite, de la mordénite, de la chinoptilolite, de la phillipsite, de la stilbite, de la laumontite, de la faujasite, de la zéolithe A, de la zéolithe L, de la zéolithe Y, de la zéolithe X et de la ZSM-5.

6. Plancher de sport (100) comprenant une couche supérieure (110) et une couche dynamique (120), la couche supérieure (110) étant agencée au-dessus de la couche dynamique (120), la couche dynamique (120) comprenant un mélange de
- particules de lave (121), et/ou de particules de calcaire (122), et/ou de particules de clinker (123), et
- de particules minérales de zéolithe microporeuse (125)
où les particules minérales de zéolithe microporeuse (125) sont présentes dans une quantité de 4 % à 65 % par rapport à la masse totale de la couche dynamique (120) et où la taille des grains des particules minérales de zéolithe microporeuse (125) est entre 0,4 mm et 12 mm.

7. Plancher de sport (100) selon la revendication 6, dans lequel la couche supérieure (110) comprend un mélange
- d'au moins un matériau (111) choisi dans le groupe constitué de schiste broyé, de pierre broyée, de brique broyée, de sable de quartz et de cendres volcaniques, ou un mélange de ceux-ci, et
- de particules minérales de zéolithe microporeuse (115),
où les particules minérales de zéolithe microporeuses (115) sont présentes dans une quantité de 5 % à 70 % par rapport à la masse totale de la couche supérieure (110), où la taille des grains de l'au moins un matériau (111) choisi dans le groupe constitué de schiste broyé, de pierre broyée, de brique broyée, de sable de quartz et de cendres volcaniques est inférieure à 3,15 mm, et où la taille des grains des particules minérales de zéolithe microporeuse (115) est entre 0,03 mm et 2,2 mm.

8. Plancher de sport (100) selon l'une quelconque des revendications 6 ou 7, comprenant en outre une couche de base (130) et/ou une couche filtre (140), agencées sous la couche dynamique (120).

9. Plancher de sport (100) selon l'une quelconque des revendications 6 à 8, comprenant en outre un système d'irrigation.

10. Utilisation d'une composition pour construire une couche dynamique (120) d'un plancher de sport (100), en particulier, d'un court en argile, d'un court en sable ou d'un court en cendres, la composition comprenant un mélange de particules de lave (121), et/ou de particules de calcaire (122), et/ou de particules de clinker (123), et de particules minérales de zéolithe microporeuse (125), où les particules minérales de zéolithe microporeuse (125) sont présentes dans une quantité de 4 % à 65 % par rapport à la masse totale de la composition et où la taille des grains des particules minérales de zéolithe microporeuse (125) est entre 0,4 mm et 12 mm.
